# EUROPEAN PATENT APPLICATION

(11) **EP 0 856 422 A1**
(43) Date of publication of application: **05.08.1998**
(21) Application number: 97200272.9
(22) Date of filing: 31.01.1997
(51) Int. Cl.: B60C 15/04

(54) **Single wire bead reinforcement**

(71) Applicant: N.V. BEKAERT S.A., 8550 Zwevegem (BE)
(72) Inventor: D'Haene, Urbain, 8570 Ingooigem (BE); Eggermont, Marc, 9880 Aalter (BE); Meersschaut, Dirk, 8710 Wielsbeke (BE)
(74) Representative: Messely, Marc, Ir.

(57) **Abstract**

A reinforcing structure (10) for a tyre bead comprises several layers (18, 20, 22) built up by means of only one steel wire (12). The steel wire (12) has - in aged condition - a tensile strength lying above 3100 - 600xd MPa where d is the wire diameter expressed in millimeter, has a total elongation at fracture of maximum 2.5 %, and has an elastic elongation of at least 1.0 %. Substantial weight savings can be realised by means of this reinforcing structure.

## Description

### Field of the invention.

The present invention relates to a reinforcing structure for a tyre bead which serves to keep a tyre to its rim during the lifetime of the tyre.

### Background of the invention.

Reinforcing structures for tyre beads are widely known in the art and their evolution is dictated by an ever continuing demand from the market for further decreasing the weight of a tyre.
EP-A1-0 611 669 discloses in this sense a steel wire adapted for the reinforcement of a tyre bead having a high tensile strength lying above 3100 - 600xd MPa (d being the wire diameter expressed in millimeter, MPa = Mega-Pascal; 1 MPa = 1 Newton/mm²) in order to fill in the above demand for weight reduction. In order to come to this high final tensile strength, an even higher intermediate tensile strength has to be obtained immediately after the last drawing step, since the last drawing step is followed by a stress-relieving treatment which causes a decrease in tensile strength of five to ten per cent. Obtaining the higher intermediate tensile strength is done at the expense of a loss in ductility, particularly expressed by a moderate to even bad torsional behaviour.
Still according to EP-A1-0 611 669, the torsional behaviour is improved by removing the residual macro tensile stresses from the surface of the steel wire.

### Summary of the invention.

It is an object of the present invention to provide an alternative way to (further) decrease the weight of reinforcement structures in steel for tyre beads.
It is also an object of the present invention to decrease the weight of the reinforcement structures in steel for tyre beads without having to apply a supplementary treatment such as the removing of macro-tensile stresses to improve the torsional behaviour.

According to the present invention there is provided a reinforcing structure for a tyre bead. The structure comprises several layers built up by means of only one steel wire. This steel wire has a tensile strength lying above 3100 - 600xd MPa, where d is the wire diameter expressed in millimeter, a total elongation at fracture of maximum 2.5 %, e.g. of maximum 2.2 % and an elastic elongation of at least 1.0 %.
The tensile strength and the total elongation at fracture are measured at the steel wire in aged condition.
The inventors have discovered that a total elongation at fracture of maximum 2.5 %, or of e.g. maximum 2.2 % is sufficient for steel wires in the bead area of tyres on condition that there is a minimum elastic elongation of 1.0 %, which is necessary to bring the tyre onto the rim.

Preferably the aged steel wire has a a yield strength at 0.2 % permanent elongation of at least 93 % of the tensile strength.

According to a preferable embodiment of the present invention, measures have been taken that the various layers of the reinforcement structure take up deformations in a balanced way.

A first way to realise this balance is to provide the various layers with an equal length of wire.
This can be done :
- by applying a wave form to each layer, a radially inner layer showing a greater waviness than a radially outer layer in order to compensate for the shorter wire lengths; the terms 'greater waviness' herein refer to a greater amplitude or a smaller wave length, or both ;
- by placing a radially inner layer under a greater angle than a radially outer layer.

A second way to realise the above-mentioned balance is to put a radially outer layer under a greater pretension than a radially inner layer.

### Brief description of the drawings.

The invention will now be described into more detail with reference to the accompanying drawings wherein
- FIGURE 1 schematically shows a reinforcing structure for a tyre bead according to the invention ;
- FIGURE 2 shows a tension-elongation curve of unbalanced layers of a reinforcing structure for a tyre bead;
- FIGURE 3 and FIGURE 4 show tension-elongation curves of balanced layers of a reinforcing structure for a tyre bead.

### Description of the preferred embodiments of the invention.

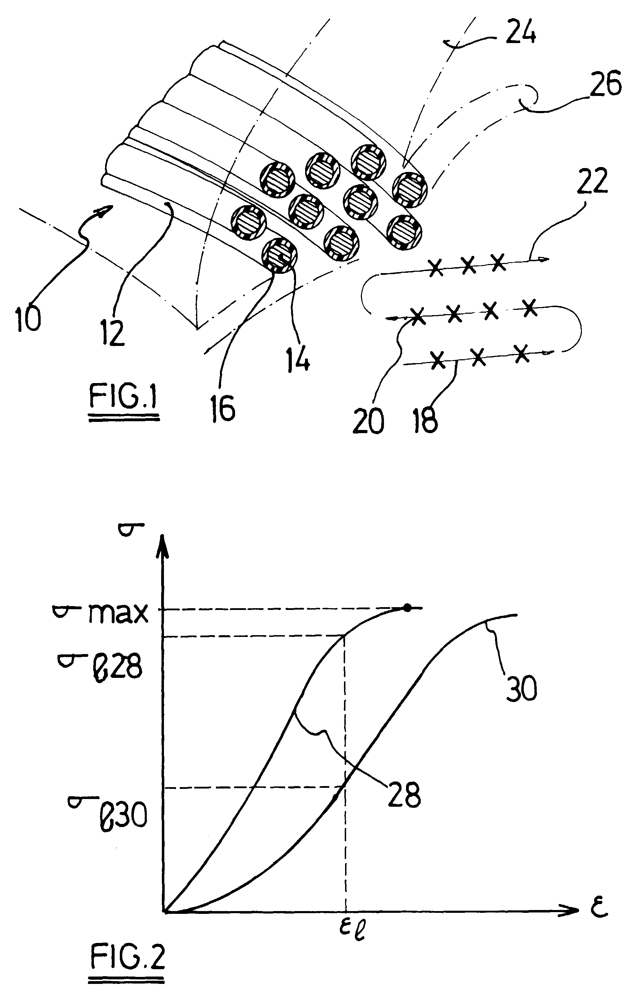

FIGURE 1 schematically shows a reinforcing structure 10 for a tyre bead according to the invention. The structure is composed of a single wire 12 with a steel core 14 and a rubber coating 16 which envelops the steel core 14. The wire 12 builds various successive layers, starting with a radially inner layer 18 consisting of three windings, going to an intermediate layer 20 (four windings) and to a radially most outer layer 22 (again three windings). It goes without saying that other embodiments with more or less windings and with more or less layers are possible. The reinforcement 10 holds tyre 24 on a rim 26. A minimum elastic elongation of 1.0 % is needed to bring the tyre 24 onto the rim 26.

FIGURE 2 shows two tension-elongation curves 28 and 30. Curve 28 relates to a radially inner layer and curve 30 to a radially outer layer of an unbalanced reinforcement structure. For a particular deformation which is translated into an elongation ε_{ℓ}, the radially inner layer which has commonly the shortest wire length has been subjected to a tension σ_{ℓ28} that is more than 90% of the tensile strength σₘₐₓ. A radially outer layer which has commonly a longer wire length, has an initial elongation that is much greater than the initial elongation of a radially inner layer and is subjected to a tension σ_{ℓ30} which is only a small fraction of the tensile strength σₘₐₓ. In other words, the radially inner layer takes up much more load than the radially outer layer and risks to be fractured before the radially outer layers start to take up substantial loads. As a consequence the maximum breaking load of the complete reinforcing structure is much lower than the strength which has been built in each layer due to the unbalance. This problem is all the more accurate in the case of the present invention where the steel wire has only a limited elongation at fracture of maximum 2.5 %. For steel wires with an elongation at fracture of more than 5 %, which are commonly used as reinforcement for tyre beads, both curves 28 and 30 converge because of the high plastic elongation. this means that various layers take up substantially equal loads.
This is the reason why, according to a preferable embodiment of the present invention, measures have been taken that the various layers of the reinforcement structure take up deformations in a balanced way.

This balance can be realised in a first way by providing the various layers with an equal length of wire.
This can be done:
- by applying a wave form to each layer, a radially inner layer showing a greater waviness than a radially outer layer in order to compensate for the shorter wire lengths; the terms 'greater waviness' herein refer to a greater amplitude or a smaller wave length, or both ;
- by placing a radially inner layer under a greater angle with respect to the rim than a radially outer layer; as a result of this greater angle, the windings of the first layer 18 have a greater distance between each other than the windings of radially more outer layers 20 and 22.

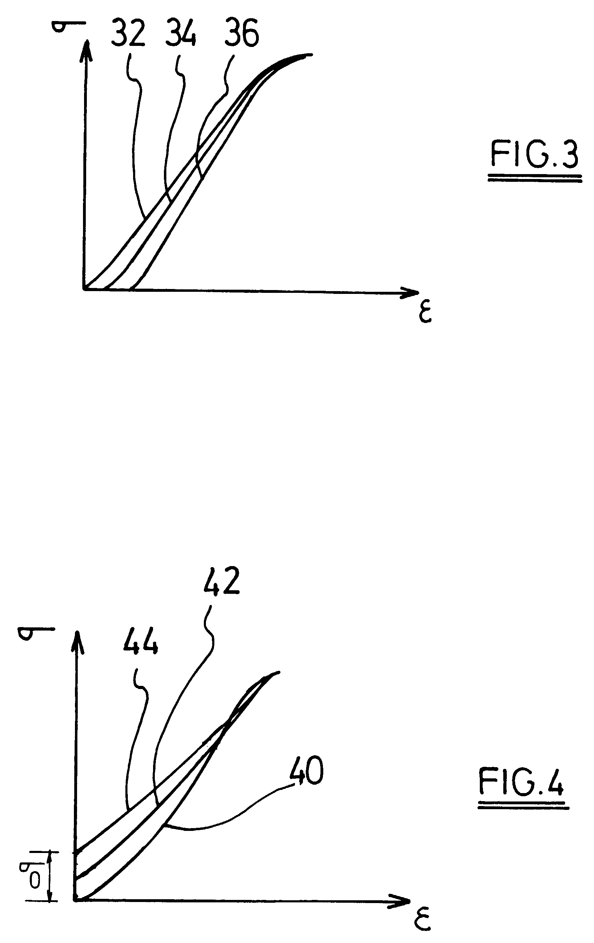

This first way leads to tension-elongation curves 32-34-36 which are shown in FIGURE 3. 32 relates to the curve of a radially inner layer, 34 to the curve of an intermediate layer and 36 to the curve of a radially outer layer. Due to the overlength which has been built in, radially inner layers have curves, the slope of which is smaller than for curves of radially outer layers so that all the curves tend to converge with increasing elongations and tensions. This means that the various layers take up substantially equal loads.

A second way to realise the above-mentioned balance is to put a radially outer layer under a greater pretension than a radially inner layer. This is illustrated in FIGURE 4. Reference number 40 refers to the tension-elongation curve of the radially inner layer, 42 to the curve of an intermediate layer and 44 to the curve of a radially outer layer. Due to common overlength of radially outer layers, their curves have a smaller slope than radially inner layers. This is compensated, however, by the pretension σₒ given to these radially outer layers which results in curves which tend to converge with increasing elongation and increasing tension.

### Method of manufacturing.

A steel wire adapted to form a reinforcing structure according to the present invention can be manufactured as follows. A wire rod with a carbon content greater than 0.70 per cent by weight (%), preferably ranging between 0.80 and 0.98 % is chosen as start material. A suitable rod composition is as follows: 0.82 % C, 0.52 % Mn, 0.23 % Si, and maximum sulphur and phosphorous contents of 0.02 %, the balance being iron and unavoidable impurities. Micro-alloying elements such as chromium, however, may be added in order to decrease the necessary degree of drawing reduction. The wire rod is cold drawn in a conventional way to its final diameter. Depending upon the starting diameter of the wire rod and upon the final diameter, intermediate patenting treatments may be necessary. The more remote the final diameter from the staring wire rod diameter, the more likely an intermediate patenting treatment is. Having reached the final diameter, a bronze or brass plating is applied to the steel wire in order in a chemical or an electro-chemical way. A stress-relieving treatment is not applied to the steel wire.

### Example

An aged steel wire adapted for a reinforcement structure according to the invention has been compared with a prior art steel wire where the common stress-relieving treatment has been applied. Tables 1 and 2 hereunder summarize the results.

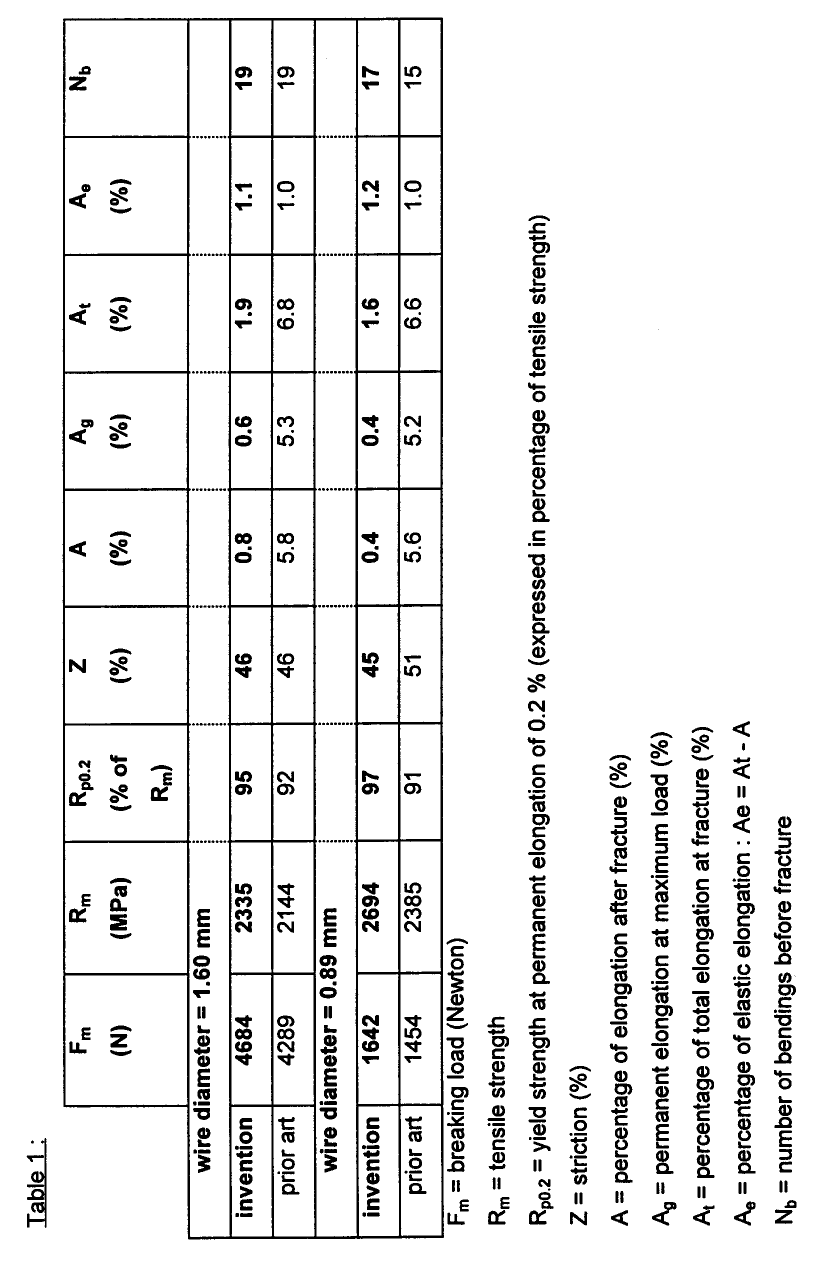

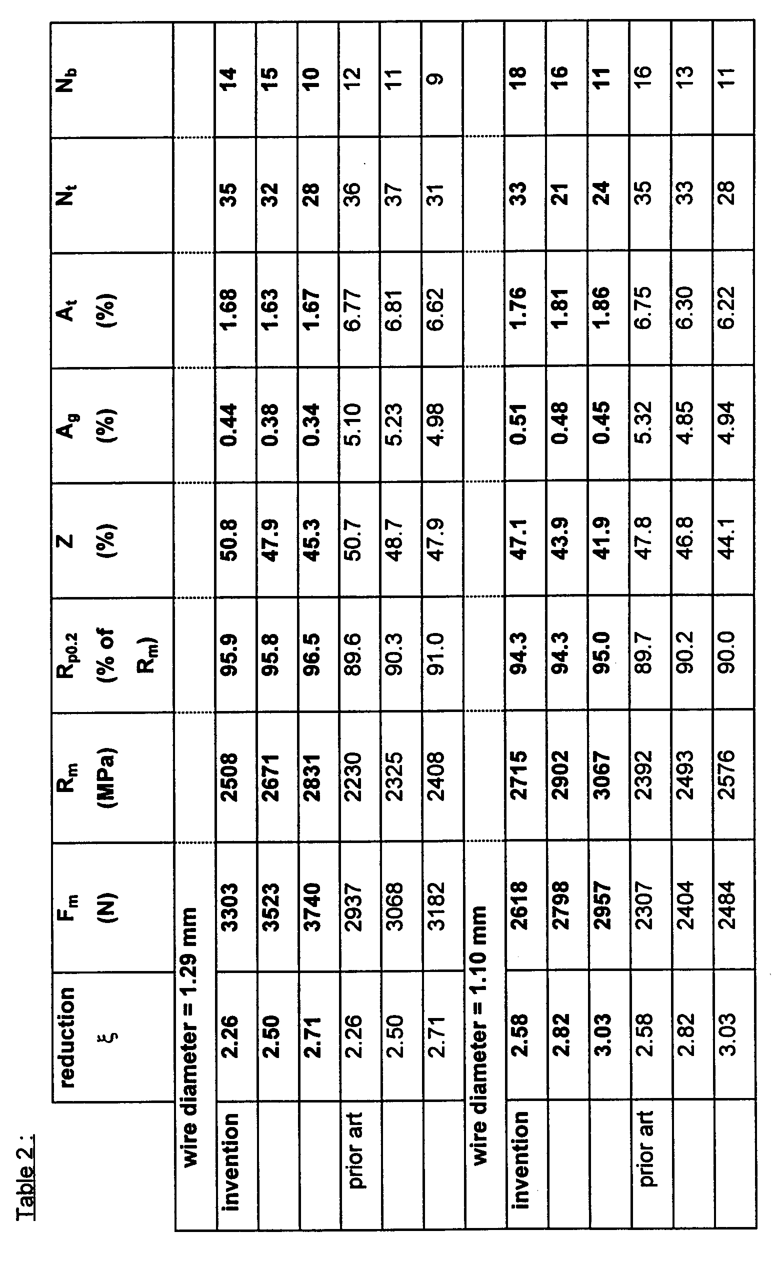

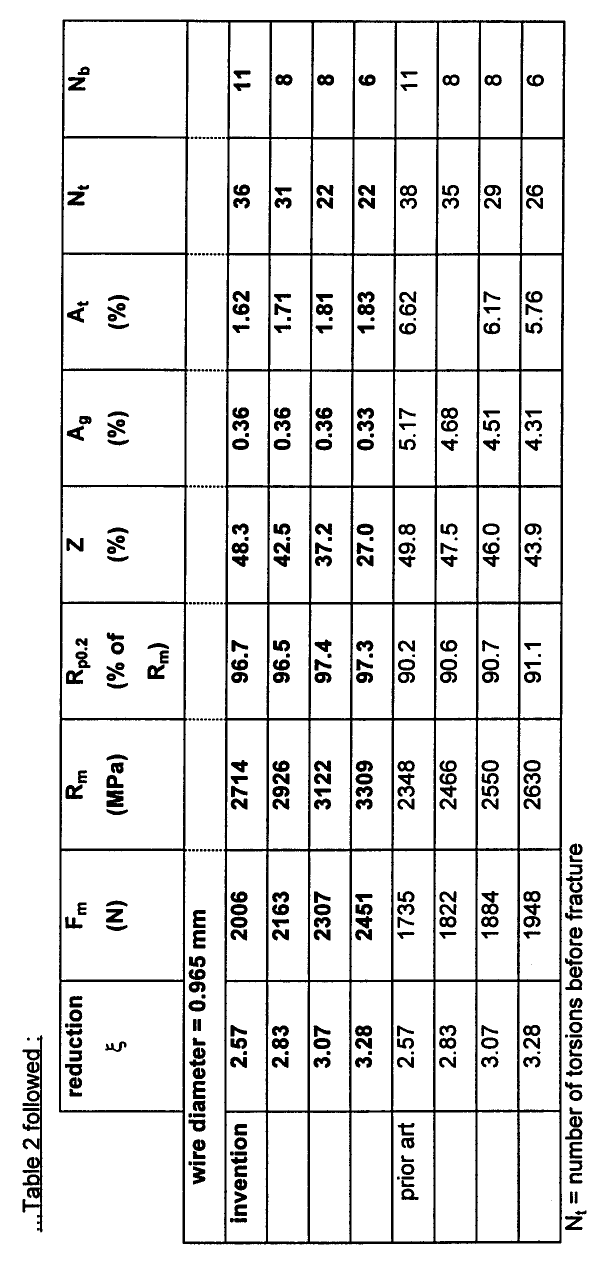

As may be derived from the above tables 1 and 2, much higher tensile strengths and much higher yield strengths are obtained with the wire according to the invention and hence much higher weight reductions (up to 30 %) without losing ductility.
More particularly, Table 1 indicates that the steel wire of an invention reinforcement has an elastic elongation Aₑ that is higher than the elastic elongation of a prior art reinforcement, which means that a tyre with an invention reinforcement will be easier placed on a rim than a tyre with a prior art reinforcement.
The values of the number of bendings N_{b} and striction Z in Tables 1 and 2, and the value of the number of torsions Nₜ in Table 2 all indicate that a steel wire for an invention reinforcement has a substantially equal level of ductility as a steel wire for a prior art reinforcement.

## Claims

1. A reinforcing structure (10) for a tyre bead said structure comprising several layers (18, 20, 22) built up by means of only one steel wire (12), said steel wire having a tensile strength being above 3100 - 600xd MPa where d is the wire diameter expressed in millimeter, a total elongation at fracture of maximum 2.5 %, an elastic elongation of at least 1.0 %, said tensile strength and said total elongation at fracture being measured at the steel wire in aged condition.

2. A structure according to claim 1 wherein said steel wire has a yield strength at 0.2 % permanent elongation of at least 93 % of the tensile strength.

3. A structure according to claim 1 wherein each of said layers has an equal length of wire.

4. A structure according to claim 3 wherein said equal length of wire in each of said layers has been realised by applying a wave form to each layer, a radially inner layer showing a greater waviness than a radially outer layer.

5. A structure according to claim 3 wherein said equal length of wire in each of said layers has been realised by placing a radially inner layer under a greater angle than a radially outer layer.

6. A structure according to claim 1 wherein a radially outer layer is put under a greater pre-tension than a radially inner layer.
